# EUROPÄISCHE PATENTSCHRIFT

(11) **EP 1 730 055 B1**
(45) Veröffentlichungstag und Bekanntmachung des Hinweises auf die Patenterteilung: **08.07.2009**
(21) Anmeldenummer: 05714721.7
(22) Anmeldetag: 29.03.2005
(51) Int. Cl.: B65G 47/14, B65B 5/06, B65B 37/08

(54) **VORRICHTUNG ZUR GLEICHMäSSIGEN BEMESSUNG UND FöRDERUNG VON HAUFWERKEN**
DEVICE FOR EVENLY MEASURING AND CONVEYING RANDOMLY ORIENTED PARTS
DISPOSITIF POUR DIMENSIONNER DES FRAGMENTS DE MANIERE HOMOGENE ET TRANSPORTER CES DERNIERS

(30) Priorität: 29.03.2004 CH 526042004
(43) Veröffentlichungstag der Anmeldung: 13.12.2006
(73) Patentinhaber: Maurer, Ulrich, 8304 Wallisellen (CH)
(72) Erfinder: Maurer, Ulrich, 8304 Wallisellen (CH)
(74) Vertreter: Walder, Martin Bernhard
(86) Internationale Anmeldenummer: PCT/CH2005/000179
(87) Internationale Veröffentlichungsnummer: WO 2005/092750

(56) Entgegenhaltungen:
- DE-B- 1 093 286
- US-A- 2 690 857
- US-A- 5 927 546

## Beschreibung

Die Erfindung betrifft eine Vorrichtung zur gleichmässigen Bemessung und Förderung von Haufwerken (folgend auch kurz Vorrichtung genannt) aus einem ungleichmässig zu Teilen vereinzelten Lebensmittel nach dem Oberbegriff des Patentanspruches 1.

Unter gleichmässiger Bemessung von Haufwerken im Sinne der Erfindung wird die Bildung von Haufwerken, d.h. Portionen, gleich bemessen nach Volumen oder Gewicht oder Anzahl von Haufwerkteilen bei gleichmässiger Beschickung der für die Bildung der Portionen bestimmten Vorrichtung, z.B. einer Waage, verstanden.

Bekannt ist eine für grob vereinzelte Haufwerkteile bestimmte Vorrichtung zur Bildung von Portionen. Im Falle der bekannten Vorrichtung handelt es sich wie im übrigen bei allen hier angesprochenen Vorrichtungen bei den Portionen um solche aus sogenannten grünen, d.h. ungegarten Pommes Frites Rohlingen, letzte vereinzelt aus Kartoffelknollen. Die Vorrichtung ist als Schöpfeinrichtung ausgebildet. Diese Schöpfeinrichtung fährt in den Rohlingsvorrat ein, belädt sich und lässt nach Ausfahren aus dem Vorrat die Ladungsteile, d.h. die grünen Rohlinge, in einen Fritierbehälter fallen. Diese Vorrichtung arbeitet mechanisch zufriedenstellend, sie erfüllt die Kriterien einer gleichmässigen Bemessung von Portionen aus Pommes Frites Rohlingen aber nicht. Bekannt ist ferner eine Vorrichtung umfassend einen ummantelten Förderschacht mit Ein- und Aus- lass und einem am Auslass angeordneten, in horizontaler Ebene drehenden Förderrad, das schachtseitig mit einem Förderkegel in den Auslass eingreift und an seinem Umfang Förderkammern aufweist, die in eine Austragsöffnung der Vorrichtung fördern. Zwischen Förderkegel und Austrittsöffnung besteht ein Spalt, durch den Rohlinge auf den Förderkegel auftreffen, um in Richtung auf und in die Förderkammern durch die Drehbewegung des Förderkegels transportiert zu werden. Der Spalt ist verschliessbar, indem der Förderschacht mit seiner keilförmigen Umfangswandung, d.h. mit dem Umfang seiner Austrittsöffnung auf den Förderkegel vertikal absenkbar ausgebildet ist. Zweck der Absenkung, d.h. des Spaltverschlusses ist, bei Nachfüllung des Förderschachtes und Stillstand des Förderrades ein unkontrolliertes Nachrutschen von Haufwerkteilen über den Förderkegel in die Förderkammern, was zu ungleichmässigen Beladungen der Förderkammern führen würde, zu verhindern. Nachteilig bei dieser bekannten Vorrichtung ist, dass der Verschluss des Spaltes nicht erreicht wird, wenn der Förderschacht bei Absenkung auf dem Förderkegel verbliebene Haufwerkteile auftrifft, so dass Haufwerkteile durch den nur teilweise verschlossenen Spalt bei Auffüllung des Förderschachtes unter ungleicher Befüllung der Förderkammern nachrutschen können. Die bekannte Vorrichtung erfüllt somit nicht die gleichmässige Beschickung einer Wiegevorrichtung.

Der Förderschaft der bekannten Vorrichtung ist konzentrisch und axial oberhalb des drehenden Förderkegels angeordnet und Haufwerkteile, also rohe Pommes Frites, werden in senkrechter Richtung auf den Förderkegel aufgebracht. Die Umfangskante der Austrittsöffnung des nicht drehenden Förderschachtes in Zusammenwirken mit der Oberfläche des drehenden Förderkegels kann ein Zerschneiden grüner Pommes Frites bewirken, so dass durch die Aufteilung grüne Pommes Frites entstehen, die ihrer Grosse nach für den gewöhnlichen Verzehr ungebräuchlich sind.

Aus der US-A 2,690,857 ist eine Materialfördervorrichtung bekannt. Diese Vorrichtung umfasst einen Füllschacht mit einer zylindrischen Umfangswandung, in dessen Endöffnung ein Förderkonus hineinragt. Der Förderkonus ist innerhalb eines Behälters angeordnet, der mit einem festen Boden mit darin ausgebildeten Austragsöffnung verschlossen ist. Ein vom Boden beabstandet angeordnetes Förderrad trägt den Förderkonus. Vom Umfang des Förderrades stehen radial Ausleger mit Schiebeblechen ab. Der Förderkonus hat einen grösseren Durchmesser als der Füllschacht. Auf der Konusoberfläche sind vier Klingen ausgebildet, die im Innern des Füllschachts leicht rühren und so das darin vorliegende Material lockern. Der Abstand zwischen dem Öffnungsrand des Füllschachts und der Konusoberfläche ist so gering gehalten, dass die im Füllschacht vorliegende Kuchenteig-Trockenmischung oder Pastetenteig -Trockenmischung nur dann austritt, wenn der Konus mit seinen Klingen sich dreht. Nachteil dieser Vorrichtung ist, dass der Durchmesser des den Förderkonus umgebenden Behälters zwingen grösser sein muss, als der Durchmesser des Füllschachts.

Hiervon ausgehend liegt der Erfindung die Aufgabe zugrunde, eine Fördervorrichtung der letztbeschriebenen Art zu schaffen, mit der die Nachteile der bekannten Vorrichtung vermieden sind und diese Aufgabe wird durch eine Vorrichtung mit den kennzeichnenden Merkmalen des Anspruches 1 gelöst.

Vorteilhafte Ausgestaltungen der nach Anspruch 1 ausgebildeten Vorrichtung kennzeichnen die dem Anspruch 1 folgenden Ansprüche.

Weitere Vorteile, Merkmale und Einzelheiten der Erfindung ergeben sich aus der Beschreibung eines bevorzugten Ausführungsbeispieles und der Zeichnung. Es zeigen:
- Fig. 1: eine nach der Erfindung ausgebildete Vorrichtung im Längsschnitt in schematisierter Darstellung, und
- Fig. 2: die Vorrichtung nach Fig. 1 bei abgenommenem Verschlussdeckel in der Draufsicht, in schematischer Darstellung.

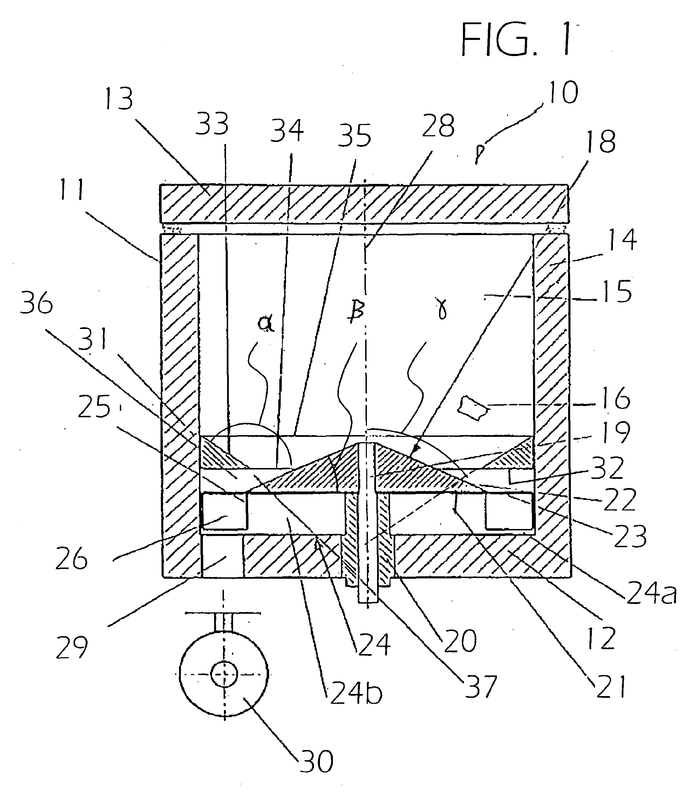

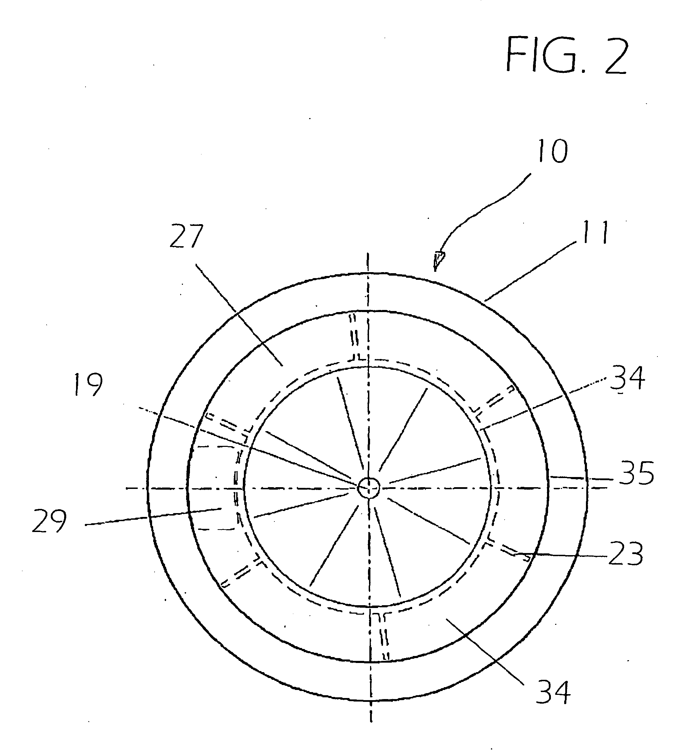

Gemäss Fig. 1 umfasst die Vorrichtung 10 nach der Erfindung einen hohlzylindrischen Vorratsbehälter 11, der einends (bodenseitig) mit dem festen Boden 12 und anderenends (deckelseitig) mit dem abnehmbaren Deckel 13 verschlossen ist. Boden 12, Deckel 13 und die Umfangswandung 14 des Vorratsbehälters 11 umschliessen einen Vorratsraum 15, in dem neben den folgend beschriebenen Einrichtungen Haufwerkteile 16, z.B. rohe, d.h. grüne Pommes Frites, aufgenommen sind. Boden 12, Deckel 13 und Umfangswandung 14 sind bevorzugt isolierend ausgestaltet, sie können daneben einzeln oder allein auch mit Heiz- oder Kühleinrichtungen (nicht gezeigt) zur Beeinflussung der Temperatur im Vorratsraum 15 und damit der im Vorratsraum 15 enthaltenen Haufwerkteile 16 ausgestaltet sein. Im Vorratsraum 15 ist bodenseitig ein Förderrad 18 vorgesehen, das über eine Welle 19 und im Boden 12 zentrisch gelagerte Buchse gehalten und von einem Antrieb (nicht gezeigt) in Drehung versetzt wird. Das Förderrad 18 umfasst eine zum Boden 12 beabstandete Scheibe 21, von der in Richtung auf den Deckel 13 ein Kegelstumpf, der Förderkegel 22, aufragt. Die Grundfläche des Förderkegels 22 fällt deckungsgleich mit der Fläche der Scheibe 21 zusammen. Am äusseren Umfang der Scheibe sind gemäss Fig. 2 bevorzugt sechs sich radial von der Scheibe 21 erstreckende Ausleger 23 vorgesehen, die sich unter Belassung eines geringfügigen radialen Abstandes von der Scheibe 21 zur inneren Wandungsfläche der Umfangswandung 14 erstrecken. Mit dem geringfügigen Abstand wird bezweckt, dass sich die Scheibe 21 mit den radial von ihr abragenden Auslegern 23 im Vorratsraum 15 drehen kann. Die Scheibe 21 ist zum Boden 12 beabstandet angeordnet, so dass zwischen Scheibe 21 und Auslegern 23 und Boden 12 ein scheibenförmiger, hohlzylindrischer Ringraum 24 gebildet ist. Dieser Ringraum 24 besteht aus zwei konzentrisch zueinander angeordneten Ringraumteilen 24a und 24b, wobei der Ringraumteil 24a durch eine Wandung 25 gebildet wird, die sich vom äusseren Umfang der Scheibe 21, den Umfang geschlossen umlaufend in Richtung auf den Boden 12 unter Belassung eines geringfügigen Abstandes zwischen Wandung 25 und Boden 12 erstreckt. Mit der Wandung 25 wird bezweckt, dass keine Haufwerksteile 16 in den Ringräum 24a eintreten können sondern nur der Ringraum 24b ausgehend von dem Förderkegel 22 mit Haufwerksteilen beschickt wird. Von den Auslegern 23 ragen in Richtung auf den Boden Schiebebleche 26 ab, wobei je zwei Schiebebleche 26 eine Transportkammer 27 bilden, d.h. bei sechs Auslegern 23 werden sechs. Transportkammern 27 gebildet, die sich um die Drehachse 28 der Scheibe 21 mit Förderkegel 22 drehen. Im Boden des Ringraumteiles 24b ist eine Austragsöffnung 29 vorgesehen, die von den Schiebeblechen 26, d.h. den Transportkammern 27 überfahren wird, wobei sich bei Ueberfahren der Austragsöffnung 29 die Transportkammern 27 entleeren. Die Austragsöffnung 29 wird radial von der Wandung 25 und der inneren Umfangswandung 14 des Vorratsraumes 15 begrenzt, in Umfangsrichtung des Ringraumteiles 24b gesehen beträgt ihre Länge ungefähr die Hälfte der Länge einer Transportkammer 27. Die Austragsöffnung 29 fördert auf eine Waage 30, die bei Erreichen eines vorbestimmten Gewichtes an Haufwerksteilen 16 den Antrieb (nicht gezeigt) des Förderrades 18 abstellt. Deckelseitig zur Scheibe 21 mit Kegelstumpf 22 ist ein Leitkegelring 31 beabstandet zur Scheibe 21 mit Auslegern 23 vorgesehen. Die Leitfläche 33 des Leitkegelringes 31 geht von der bodenseitigen Stirnfläche 32 mit Öffnung 34 aus und verläuft unter einem Winkel α zum deckelseitigen Umfang 35 des Leitkegelringes 31, in den die Leitfläche 33 ausmündet.

Während die Scheibe 21 und die Fläche des Kegelstumpfes 22 zwischen sich einen Winkel β kleiner 90° (Winkelgrade) einschliessen, ist der Winkel γ zwischen der Stirnfläche 32 und der Leitfläche 33 grösser 90° (Winkelgrade), so dass die geneigte Leitfläche 33 entsprechend ihrer Neigung Fördergut (grüne Pommes Frites) schräggerichtet auf den Kegelstumpf 22 fördert.

Die Ausführungsform, nach der die Leitfläche 33 des Leitkegelringes 31 als eine Fläche mit gerader Schnittlinie zwischen Stirnfläche 32 und deckelseitigem Ende des Leitkegelringes 31 in letzteren ausmündend, ist bevorzugt. Auf diese Ausführungsform ist die Leitfläche 33 nicht beschränkt, sie kann zwischen Stirnfläche 32 und deckelseitigem Ende des Leitkegels ausgehend von der Öffnung 34 und auslaufend am Umfang des deckelseitigen Endes zum Umfang des Leitkegelringes 31 auch mit konvexer oder konkaver Schnittlinie ausgebildet sein.

Der äussere Umfang des Leitkegelringes 31 steht mit der inneren Umfangswandung 14 fest in Eingriff, der Leitkegelring 31 kann bevorzugt aber auch im Vorratsraum 15 axial verschiebbar an die Umfangswandung 14 angelenkt sein. Damit kann die Höhe des Durchtrittsspaltes axial gesehen zwischen dem äusseren Umfang der Scheibe 21 mit darauf auslaufenden Kegelstumpf 22 und dem Umfang der Öffnung 34 in der Stirnfläche 32 des Leitkegelringes zur Anpassung des Durchtrittsspaltes 37 an beispielsweise Durchschnittsgrössen von Haufwerksteilen 16 variiert werden.

Der Durchmesser der Öffnung 34 entspricht bevorzugt dem äusseren Durchmesser der Scheibe 21, die Stirnfläche 32 ist deckelseitig beabstandet zu den Auslegern 23 angeordnet und der Kegelstumpf 22 ragt mit einem Teil, dessen Grundfläche im Durchmesser kleiner ist als der Durchmesser der Öffnung 34, deckelseitig in den Leitkegelring 31 auf. Es entsteht dadurch ein Raum 36 oberhalb, d.h. deckelseits der Ausleger 23, von dem aus die Transportkammern 27 beschickt werden, wobei der Raum 36 seinerseits über den drehenden Kegelstumpf 22 befrachtet wird.

Mit der vorstehend beschriebenen, erfindungsgemässen Ausführungsform einer Fördervorrichtung mit drehendem Förderrad wurden die Nachteile der bekannten Fördervorrichtung mit Förderrad beseitigt. Die erfindungsgemässe Fördervorrichtung erfüllt alle Kriterien, die die "gleichmässige Bemessung von Haufwerken" umschreiben.

## Patentansprüche

1. Vorrichtung zur gleichmässigen Bemessung und Förderung von Haufwerken aus einem ungleichmässig zu Teilen vereinzelten Lebensmittel, umfassend
- einen Vorratsbehälter (11) mit einer Umfangswandung (14) um einen hohlzylindrischen Vorratsraum (15), welcher Vorratsbehälter (11) einenends mit einem festen Boden (12) mit darin aufgenommener Austragsöffnung (29) verschlossen ist, und
- ein zum Boden beabstandet angeordnetes Förderrad mit darauf angeordnetem Förderkegel und am Umfang des Förderrades sich radial vom Förderrad erstreckende Ausleger (23) mit Schiebeblechen (26),
**dadurch gekennzeichnet, dass** der Vorratsbehälter (11) anderenends mit einem abnehmbaren Deckel (13) verschlossen ist, in Richtung auf den Deckel (13) oberhalb des Förderrades (18) ein hohlzylindrischer Leitkegelring (31) mit einer axialen Öffnung (34) innerhalb der Umfangswandung (14) derart angeordnet ist, dass durch dessen axiale Öffnung (34) ein Teil des Förderkegels (22) aufragt, welcher Leitkegelring (31) eine zum Deckel hin gerichtete Leitfläche (33) besitzt, die vom Öffnungsrand der axialen Öffnung (34) zur Umfangswandung (14) hin in Richtung zum Deckel (13) ansteigt.

2. Vorrichtung nach Anspruch 1, **dadurch gekennzeichnet, dass** sich die Schiebebleche (26) von den Auslegern (23) axial in Richtung auf den Boden (12) erstrecken.

3. Vorrichtung nach einem der Ansprüche 1 oder 2, **dadurch gekennzeichnet, dass** das Förderrad (18) als Scheibe (21) mit darauf konzentrisch angeordnetem Förderkegel (22), der Umfang der Grundfläche des Förderkegels (22) mit dem Umfang der Scheibe (21) zusammenfallend, ausgebildet ist.

4. Vorrichtung nach Anspruch 3, **dadurch gekennzeichnet, dass** der Förderkegel (22) und die Scheibe (21) zwischen sich einen Winkel (β) kleiner 90 Winkelgraden einschliessen.

5. Vorrichtung nach einem der Ansprüche 1 bis 4, **dadurch gekennzeichnet, dass** der Durchmesser der Scheibe (21) gleich bemessen wie der Durchmesser der axialen Oeffnung (34) ausgebildet ist.

6. Vorrichtung nach einem der Ansprüche 1 bis 5, **dadurch gekennzeichnet, dass** der Leitkegelring (31) deckelseits zu den Auslegern (23) beabstandet angeordnet ist und eine dem Boden (12) zugewandte Stirnfläche (32) des Leitkegelringes die Ausleger (23) überdeckend, einen Raum (36) zwischen Auslegern (23) und Stirnfläche (32) bildend ausgebildet ist.

7. Vorrichtung nach einem der Ansprüche 1 bis 6, **dadurch gekennzeichnet, dass** der Leitkegelring (31) im Vorratsraum (15) axial verschiebbar ausgebildet ist.

## Claims

1. Device for the uniform rating and conveying of heaps of foodstuff detached unevenly to parts comprising
- a store tank (11) with a circumferential wall (14) around a hollow cylindrical store room (15), the store tank (11) being closed at the one end with a solid bottom (12) with a discharging opening (29) received therein and
- a conveying wheel placed spaced from the bottom with a conveying cone placed thereon and brackets (23) extending on the periphery of the conveying wheel radially from the conveying wheel with sliding sheets (26),
**characterized in that** the store tank (11) is closed at the other end with a removable cover (13), a hollow cylindrical guiding taper ring (31) with an axial opening (34) inside the peripheral wall (14) is placed in direction of the cover (13) above the conveying wheel (18) in such a manner that a part of the conveying cone (22) projects through its axial opening (34), the guiding taper ring (31) having a guiding surface (33) turned to the cover which increases from the opening edge of the axial opening (34) to the peripheral wall (14) in direction of the cover (13).

2. Device according to claim 1, **characterized in that** the sliding sheets (26) extend from the brackets (23) axially in direction of the bottom (12).

3. Device according to any of the claims 1 or 2, **characterized in that** the conveying wheel (18) is configured as a disk (21) with a conveying cone (22) placed concentrically thereon, the circumference of the base surface of the conveying cone (22) coinciding with the circumference of the disk (21).

4. Device according to claim 3, **characterized in that** the conveying cone (22) and the disk (21) include between them an angle (β) of less than 90 degrees.

5. Device according to any of the claims 1 to 4, **characterized in that** the diameter of the disk (21) is configured of the same size as the diameter of the axial opening (34).

6. Device according to any of the claims 1 to 5, **characterized in that** the guiding taper ring (31) is placed on the cover side spaced from the brackets (23) and a front surface (32) of the guiding taper ring, front surface which is turned to the bottom (12), is configured covering the brackets (23), forming a space (36) between the brackets (23) and the front surface (32).

7. Device according to any of the claims 1 to 6, **characterized in that** the guiding taper ring (31) is configured movable axially in the store room (15).

## Revendications

1. Dispositif pour le dimensionnement et la manutention uniforme de tas d'un aliment déparié de manière non uniforme en parties comprenant :
- un réservoir (11) avec une paroi circonférentielle (14) autour d'un espace de stockage cylindrique creux (15), lequel réservoir (11) est fermé à une extrémité avec un fond solide (12) avec une ouverture de déversement (29) qui y est logée et
- une roue de manutention placée espacée du fond avec un cône de manutention placé dessus et des consoles (23) qui s'étendent à la périphérie de la roue de manutention radialement à partir de la roue de manutention avec des tôles coulissantes (26),
**caractérisé en ce que** le réservoir (11) est fermé à l'autre extrémité avec un couvercle amovible (13), qu'un anneau conique directeur cylindrique creux (31) avec une ouverture axiale (34) à l'intérieur de la paroi circonférentielle (14) est placé en direction du couvercle (13) au-dessus de la roue de manutention (18) de telle manière qu'une partie du cône de manutention (22) fait saillie par son ouverture axiale (34), lequel anneau conique directeur (31) possède une surface directrice (33) orientée vers le couvercle, surface qui monte du bord d'ouverture de l'ouverture axiale (34) vers la paroi circonférentielle (14) en direction du couvercle (13).

2. Dispositif selon la revendication 1, **caractérisé en ce que** les tôles coulissantes (26) s'étendent des consoles (23) dans le sens axial en direction du fond (12).

3. Dispositif selon l'une des revendications 1 ou 2, **caractérisé en ce que** la roue de manutention (18) est configurée comme un disque (21) avec un cône de manutention (22) placé concentrique dessus, la circonférence de la surface de base du cône de manutention (22) coïncidant avec la circonférence du disque (21).

4. Dispositif selon la revendication 3, **caractérisé en ce que** le cône de manutention (22) et le disque (21) enferment entre eux un angle (β) inférieur à 90 degrés.

5. Dispositif selon l'une des revendications 1 à 4, **caractérisé en ce que** le diamètre du disque (2) est configuré dimensionné égal au diamètre de l'ouverture axiale (34).

6. Dispositif selon l'une des revendications 1 à 5, **caractérisé en ce que** l'anneau conique directeur (31) est placé du côté du couvercle en étant espacé des consoles (23) et une surface frontale (32) de l'anneau conique directeur tournée vers le fond (12) est configurée recouvrant les consoles (23), formant un espace (36) entre les consoles (23) et la surface frontale (32).

7. Dispositif selon l'une des revendications 1 à 6, **caractérisé en ce que** l'anneau conique directeur (31) est configuré déplaçable axialement dans l'espace de stockage (15).
